(19) Europäisches Patentamt
European Patent Office
Office européen des brevets

(11) Publication number: **0 271 874 B1**

# (12) EUROPEAN PATENT SPECIFICATION

(45) Date of publication of patent specification: **14.10.92**

(51) Int. Cl.5: **C08F 12/00**, C08F 4/64

(21) Application number: **87118571.6**

(22) Date of filing: **15.12.87**

## (54) Process for producing crystalline vinyl aromatic polymers having a predominantly syndiotactic structure.

(30) Priority: **15.12.86 IT 4100786**
**23.12.86 IT 2282786**

(43) Date of publication of application:
**22.06.88 Bulletin 88/25**

(45) Publication of the grant of the patent:
**14.10.92 Bulletin 92/42**

(84) Designated Contracting States:
**AT BE CH DE ES FR GB IT LI NL SE**

(56) References cited:
**US-A- 3 639 332**

(73) Proprietor: **Montedison S.p.A.**
**31, Foro Buonaparte**
**I-20121 Milan(IT)**

(72) Inventor: **Albizzati, Enrico**
**64, via Roma**
**I-28041 Arona, Novara(IT)**
Inventor: **Giannini, Umberto Dr.**
**53, via Sismondi**
**I-20133 Milano(IT)**
Inventor: **Giunchi, Giovanni Dr.**
**15, via Don Gallotti**
**I-28100 Novara(IT)**
Inventor: **Mazzocchi, Romano**
**9, via Andersen**
**I-28067 Pernate(IT)**
Inventor: **Resconi, Luigi Dr.**
**14, via A. Doria**
**I-20124 Milano(IT)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The present invention relates to a process for preparing predominantly syndiotactic crystalline vinyl aromatic polymers. More particularly, the present invention relates to a process for preparing crystalline styrene polymers in which the chains are at least mainly in the syndiotactic configuration.

As is known, styrene polymers and particularly polystyrene are thermoplastic materials which may show high molecular weights. Its thermal resistance, thermomoldability and excellent insulating properties render polystyrene particularly suitable for the production of extruded articles, molded articles and films to be used mainly in the field of sound and heat insulation, of packing and as dielectric material.

Polystyrene can be produced by radical polymerization, anionic polymerization or cationic polymerization.

The styrene polymerization conducted by the radical mechanism, either thermally or in the presence of initiators, can be effected by bulk polymerization, emulsion polymerization, suspension polymerization or bulk suspension polymerization. On X-ray analysis, the resulting polymer exhibits a diffraction pattern typical for an amorphous structure, and on $^1$H-NMR analysis it exhibits a spectrum with broad bands without peak resolution in the area of the chemical shifts typical for the methine and methylene protons. This is in accordance with a random sequence of monomeric units with different steric configuration (atactic structure).

The use of this amorphous polymer is limited by its low glass transition temperature (Tg) of about 100 ° C. Above this temperature there is a drastic deterioration of the mechanical properties of the polymer.

Amorphous polymers are also obtained when styrene polymerization is conducted by cationic and anionic catalysis even if in some cases a prevalent syndiotactic configuration of the carbon atoms in the main chain was found.

It is also known that crystalline, mainly isotactic polystyrene can be produced by stereospecific polymerization of styrene. Styrene polymerization, in such case, is carried out in the presence of Ziegler-Natta-type catalysts based on halogenated compounds of transition metals, either as such or supported on magnesium halides, in combination with aluminium alkyls, optionally in the presence of electron donors. A detailed description of this type of polymerization is given in IT-PS- 537 425, US-A-3 161 624 and 2 882 263 and in GB-A-826 021 and 844 944. Polystyrene prepared by means of such types of stereospecific catalysts was obtained for the first time by G. Natta et al (J. Am. Chem. Soc. 1955, 77, 1700) and shows, in the X-ray pattern, diffraction peaks which may be assigned to a structure which is mainly isotactic. On $^1$H-NMR analysis, the multiplet assigned to the methylene group is indicative of a non-equivalence of the two protons, what also indicates an isotactic structure (Heatley, F. and Bovey, F.A., Macromolecules (1968), 1, 301). This crystalline, mainly isotactic polymer has not found any industrial use as its crystallization rate is very low.

Also known (N. Ishihara et al., Macromolecules (1986), 19, 2464-2465) is a crystalline polystyrene having a low weight average molecular weight (about 82 000) and mainly a syndiotactic structure, as concluded on the basis of the data of X-ray diffraction, infrared spectroscopic analysis, $^1$H-NMR and $^{13}$C-NMR analyses.

This polymer shows a high melting point, about 270 ° C, and a high crystallization rate. The thermal and structural characteristics of this mainly syndiotactic polymer allow retention of the mechanical properties even at higher temperatures than the glass transition temperature (Tg). It is well known, however, that many mechanical properties of polystyrene, such as tensile strength, elongation at break, tenacity and stress-cracking resistance, improve remarkably as the molecular weight increases, while when the weight average molecular weight is below 100 000 the values of said properties are unacceptable for a practical industrial utilization. (Encyclopedia of Polymer Science and Technology, vol. 13).

For this reason, the commercially available polystyrenes have weight average molecular weights ranging from 200 000 to 300 000.

EP-A-210 615 describes styrene polymers having the following repeating unit:

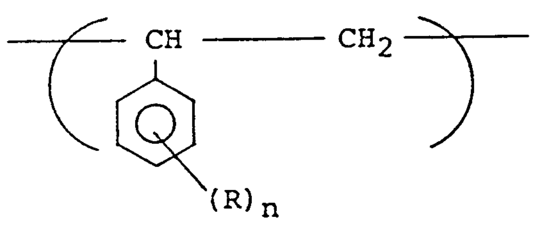

with a degree of polymerization of not less than 5, and a stereoregularity which is mainly syndiotactic. EP-A-224 097 claims a process for producing styrene polymers which comprises polymerizing styrene or styrene derivatives by the use of a catalyst comprising:
(A) a titanium compound, and (B) a contact product of an organoaluminium compound and a condensation agent. However, those references do not describe the use of catalyst systems containing Ti-N compounds.

It has now surprisingly been found that by using particular catalyst systems it is possible to obtain crystalline vinyl aromatic polymers and particularly styrene or styrene derivative polymers having a mainly syndiotactic structure and an average molecular weight even higher than 100 000.

Thus, the present invention provides crystalline vinyl aromatic polymers, and particularly styrene or styrene derivative polymers, having a predominantly syndiotactic structure and particularly a regular structure with syndiotactic configuration at least in long portions of the chain and an average molecular weight which may be even higher than 100 000.

The crystalline polymers with a mainly syndiotactic structure according to the present invention are endowed with improved mechanical properties as compared to the ones of the syndiotactic polystyrene of the art, said mechanical properties being combined with a melting point of about 270 °C or even higher and with a high crystallization rate.

According to the present invention, the process for preparing crystalline vinyl aromatic polymers, and particularly styrene or styrene derivative polymers, of mainly syndiotactic structure consists in carrying out the polymerization of the vinyl aromatic monomer, and particularly of styrene or styrene derivative, either alone or in admixture with up to 30 % (particularly up to 15 %) of another copolymerizable ethylenically unsaturated monomer, in the presence of catalytic amounts of a catalyst system comprising the product of the reaction between:

a) a titanium compound containing at least one Ti-N bond and

b) an organoaluminium compound containing at least one oxygen atom bound to the aluminium atom or located between two Al atoms.

The titanium compounds are utilizable as such or supported on organic or inorganic carriers, such as for example $SiO_2$ or $Al_2O_3$ or Mg halides (e.g. $MgCl_2$ and $MgBr_2$). Also the organoaluminium compound can be used as such or supported on the same carriers utilized for the titanium compounds.

The catalyst components carried on Mg halides are well known in literature and are described, for example, in US-A-4 298 718 or in GB-A-1 292 853 and 1 305 610 in the name of the applicant hereof, the disclosures of which are explicitly referred to.

The molar ratio of Al to Ti is not critical and is in the range from 1 to 1000, preferably from 10 to 200. The concentration of the aluminium compound preferably ranges from $10^{-4}$ to 1, particularly from $10^{-3}$ to $10^{-1}$, mole/liter, based on the reaction mixture.

Typical examples of titanium compounds corresponding to the definition of component a) are:
$TiCl_3N(C_6H_5)_2$, $TiCl_3N(C_2H_5)_2$; $TiCl_2(N(C_4H_9)_2)_2$; $TiCl_2N(C_4H_9)_2$; $TiCl(N(C_3H_7)_2)_3$; $TiCl_2N(C_2H_5)_2$; $TiCl_2[N(C_2H_5)_2]_2$; $Ti[N(C_6H_5)_2]_4$; $Ti[N(C_2H_5)_2]_4$.

Examples of organoaluminium compounds corresponding to the definition of component b) are:

(A) 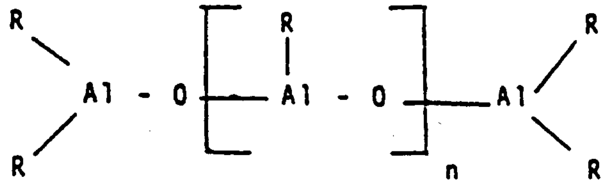

for a straight aluminoxane

(B) 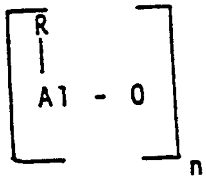

for a cyclic aluminoxane,
wherein
n is 0 or an integer from 1 to 40, preferably from 10 to 30; R can be: an alkyl radical containing 1 to 20, preferably 1 to 8 carbon atoms, an aryl radical containing 6 to 20, preferably 6 to 12 carbon atoms, an arylalkyl radical containing 7 to 20, preferably 7 to 12 carbon atoms or a cycloalkyl radical containing 3 to 20, preferably 5 to 8 carbon atoms; an O-R′ radical, where R′ may be an alkyl radical having 1 to 8, preferably 1 to 4, carbon atoms or an aryl radical having 6 to 20, preferably 6 to 12, carbon atoms or halogen (preferably F, Cl or Br) provided that not all radicals R are halogen or O-R′.

R can be the same or different in the various positions of the above cited components (A) and (B).

Representative examples are linear methylaluminoxane with n = 20; cyclic methylaluminoxane with n = 20.

These aluminium compounds can be used either alone or blended with aluminium trialkyls $AlR''_3$ or aluminium alkyl halides $AlR''_2X$ and $AlR''X_2$, wherein the alkyl groups R″ contain preferably 1 to 8 carbon atoms and may be the same or different and X may be the same or different and represent F, Cl, Br and J, particularly Cl and Br.

The polymerization of vinylaromatic monomers, according to both the continuous and the discontinuous process, can be carried out in bulk, in suspension, in solution or in bulk-suspension. The polymerization temperature is preferably in the range of from -80 °C to +200 °C, most preferably from -20 °C to +100 °C.

The molecular weight of the polymer can be adjusted by using the techniques which are usually adopted in the Ziegler-Natta catalysis, for example by addition of hydrogen.

The modalities concerning the addition of the various catalyst system components, of the monomer and of the solvent, if any, are not critical.

The term "vinylaromatic polymers", whenever used in the present description and in the claims, comprises styrene polymers, styrene derivative polymers and the related copolymers containing up to 30 % by weight of another copolymerizable, ethylenically unsaturated monomer, suitably of general formula:

$CH_2 = CH - R_3$

wherein $R_3$ is hydrogen or an aliphatic group containing 1 to 6, preferably 1 to 4, carbon atoms; an aryl group containing 6 to 20, preferably 6 to 12, carbon atoms; an aryl group substituted with alkyl or halogen radicals in the nucleus and containing altogether 6 to 30, preferably 6 to 18 carbon atoms, or a cycloaliphatic group, optionally alkyl- or halogen-substituted, containing altogether 3 to 20, preferably 5 to 12, carbon atoms.

The styrene derivatives include alkylstyrene, halogenated styrene, vinyl-naphthalene and vinyltetrahydro-naphthalene containing from 9 to 12 carbon atoms in the molecule. Representative examples of styrene derivatives are alpha- or beta-vinyl naphthalene, 1,2,3,4-tetrahydro-6-vinyl naphthalene, styrene ring substituted with one or more (up to 5) alkyl groups containing from 1 to 4 carbon atoms and/or with one or more (up to 5) halogen atoms, such as chlorine. The term ring substituted styrene includes first of all and preferably p-methyl-styrene even if other alkyl derivatives may be used with the same results.

Typical examples of ring substituted styrene are:
methylstyrene, ethylstyrene, butylstyrene, p-tert-butylstyrene, and dimethylstyrene, chlorostyrene, bromostyrene and fluorostyrene, chloromethylstyrene, alkoxystyrene, preferably $C_{1-4}$ alkoxystyrene, such as methoxystyrene, carboxymethylstyrene (e.g. acetoxymethylstyrene), alkyletherstyrene, alkylsilylstyrene, vinylbenzenesulfonic acid esters, and vinylbenzyldialkoxy phosphide.

The crystalline styrene or styrene derivative polymers having a mainly syndiotactic structure, obtained by the process of the present invention, were characterized by the following properties and by using the methods indicated hereinbelow:

a) Residue of the extraction with methylethyl ketone (MEK), carried out in a Kumagawa extractor for 24 hours.

b) Weight average molecular weight, ($\overline{M}_w$), determined by gel permeation chromatography (G.P.C.) carried out with a Waters apparatus 150 ALC-GPC in ortho-dichlorobenzene (ODCB) at 135 °C. Instrument calibration was obtained by using standard samples of atactic polystyrene of known molecular weight (Waters Associates Inc.).

c) Melting point (M.P., determined by means of a differential calorimeter, model Perkin-Elmer DSC 7, as the temperature corresponding to the maximum of the endothermal peak, at a scanning rate of 40 °C/min.

d) Crystallinity of the polymer residue of MEK, determined after melting and solidification by means of X-ray diffraction, with the powder method, by verifying in the pattern the presence of sharp reflexes typical

of the crystalline substances.
The values of the interplanar distances corresponding to said reflexes were determined with an error of ± 0.1 A.
e) Syndiotacticity of the polymers, determined by $^{1}H$-NMR or $^{13}C$-NMR analysis, carried out on a BRUKER AM-300 instrument, in orthodichlorobenzene at 125 °C, using hexamethyldisiloxane as standard.
The following examples are given to illustrate the present invention.

Example 1

Into a glass reactor having an internal volume of 100 ml and being equipped with a stirrer there were placed, in an inert atmosphere and at 20 °C:
250 mg of methylaluminoxane (A)
10 ml of toluene
17 mg of $TiCl_3N(C_2H_5)_2$.
After 5 minutes, 30 ml of styrene, passed through an alumina column and distilled over $LiAlH_4$, were added. Within 30 minutes the temperature was brought to 50 °C and polymerization was conducted for 4 hours. After this period of time, the polymer was coagulated with methanol, acidified with hydrochloric acid and repeatedly washed with methanol. After drying there was obtained a polymer with a conversion of 25 % and showing a residue of MEK of 86 %, weight average molecular weight of 650,000 and a melting point of 270 °C.

On X-ray analysis, the residue of the extraction with MEK exhibited, after melting and solidification, reflexes of relatively high intensity corresponding to interplanar distances of 13.1 Å, 7.6 Å, 6.46 Å, 4.37 Å and 2.58 Å.

The $^{1}H$-NMR pattern of the polymer showed chemical shifts of the methine and methylene protons, respectively centered at 1.9 and 1.4 ppm, as illustrated in Fig. 1.

(A) Methylaluminoxane was prepared as follows:
Into a three-neck flask having an internal volume of 500 ml, equipped with a dropping funnel, a stop cock and a magnetic stirrer, there were placed 37.1 g of $Al_2(SO_4)_3.18H_2O$ and 250 ml of toluene in a nitrogen atmosphere.

50 ml of $Al(CH_3)_3$ were placed into the dropping funnel and were added under stirring within 30 minutes. The reaction was carried out at 60 °C for 3 hours. The aluminium sulphate was filtered off from the suspension and the solvent was removed. 15.5 g of a solid white product were obtained.

Example 2

Example 1 was repeated, using:
250 mg of methylaluminoxane,
10 ml of toluene,
20 mg of $Cl_2TiN(C_2H_5)_2$.
The polymerization conversion was 28 % and the polymer showed a residue of MEK extraction of 89 %,, a weight average molecular weight of 550,000 and a melting point of 269 °C. The X-ray diffraction pattern and the $^{1}H$- NMR pattern were similar to those of Example 1.

Example 3

Example 1 was repeated, using:
230 mg of methylaluminoxane,
10 ml of toluene,
22 mg of $Cl_3TiN(C_6H_5)_2$.

The polymerzation conversion was 30 % and the polymer exhibited a residue of MEK extraction of 90 %, a weight average molecular weight of 650,000 and a melting point of 270 °C. The X-ray diffraction pattern and the $^{1}H$-NMR pattern were similar to those of Example 1.

Specific examples of the various generic groups mentioned in the preceding description are:
Alkyl and aliphatic radicals: methyl, ethyl, propyl, i-propyl, n-butyl, sec.-butyl, iso-butyl, tert.-butyl, pentyl, hexyl, heptyl, 2-ethylhexyl, n-octyl, nonyl, decyl, undecyl and dodecyl.

Cycloaliphatic and cycloalkyl radicals: cyclopropyl, cyclobutyl, cyclopentyl, cyclohexyl, cycloheptyl, cyclooctyl.

Arylalkyl: benzyl, (1- and 2-) phenylethyl, phenylpropyl, phenylbutyl.
Halogen: F, Cl, Br and J.
Carboxy: acetoxy, propoxy, butoxy.
Alkoxy: methoxy, ethoxy, propoxy, butoxy.

## Claims

1. A process for producing crystalline vinyl aromatic polymers having a predominantly syndiotactic structure, which comprises polymerizing the vinyl aromatic monomers, either alone or in admixture with up to 30 % of another copolymerizable ethylenically unsaturated monomer, in the presence of catalytic amounts of a catalyst system comprising the product of the reaction between:
   a) a titanium compound containing at least one Ti-N bond, and
   b) an organoaluminium compound containing at least one oxygen atom, bound to one aluminium atom or located between two Al atoms.

2. The process of claim 1, wherein the transition metal compound and the organoaluminium compound are supported on organic or inorganic carriers, such as $SiO_2$, $Al_2O_3$ or Mg halides.

3. The process of claim 1 or 2, wherein the molar ratio of organoaluminium compound to the titanium compound is from 1 to 1000, preferably from 10 to 200.

4. The process of any of the preceding claims, wherein the concentration of the organoaluminium compound is from $10^{-4}$ to 1 mole/liter, based on the reaction mixture.

5. The process of any of the preceding claims, wherein the transition metal compound is selected from $TiCl_3N(C_6H_5)_2$, $TiCl_3N(C_2H_5)_2$; $TiCl_2(N(C_4H_9)_2)_2$; $TiCl_2N(C_4H_9)_2$; $TiCl(N(C_3H_7)_2)_3$; $TiCl_2N(C_2H_5)_2$; $TiCl_2[N(C_2H_5)_2]_2$; $Ti[N(C_6H_5)_2]_4$; $Ti[N(C_2H_5)_2]_4$.

6. The process of any of the preceding claims, wherein the organoaluminium compound is selected from:

(A) 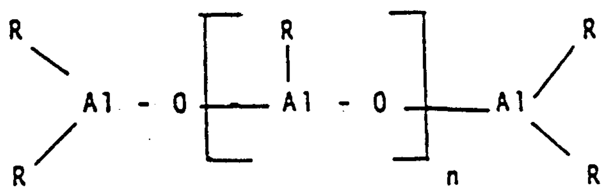 and

(B) 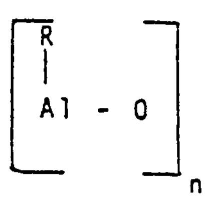

   wherein:
   n is 0 or an integer from 1 to 40, preferably from 10 to 30; R can be: an alkyl radical containing 1 to 20 carbon atoms, an aryl radical containing 6 to 20 carbon atoms, an arylalkyl radical containing 7 to 20 carbon atoms or a cycloalkyl radical containing 3 to 20 carbon atoms, an O-R′ radical in which R′ may be an alkyl radical containing 1 to 8 carbon atoms or an aryl radical containing 6 to 20 carbon atoms; or a halogen, provided that not all radicals R are halogen or O-R′.

7. The process according to claim 6, wherein the organoaluminium compounds are blended with aluminium trialkyls or aluminium alkyl halides, wherein the alkyl groups contain from 1 to 8 carbon atoms.

8. The process of claim 6, wherein the organoaluminium compound is the straight methylaluminoxane (A) with n = 20.

9. The process of claim 6, wherein the organoaluminium compound is the cyclic methylaluminoxane (B) with n = 20.

10. The process according to anyone of the preceding claims, wherein the vinyl aromatic monomer is styrene or a styrene derivative, e.g. selected from alkylstyrene, halogenated styrene, vinylnaphthalene and vinyltetrahydronaphthalene, each containing from 9 to 12 carbon atoms in the molecule.

**Patentansprüche**

1. Verfahren zur Herstellung kristalliner vinylaromatischer Polymere mit hauptsächlich syndiotaktischer Struktur, umfassend die Polymerisation des vinylaromatischen Monomers, entweder allein oder in Mischung mit bis zu 30% eines anderen copolymerisierbaren, ethylenisch ungesättigten Monomers, in Gegenwart katalytischer Mengen eines Katalysatorsystems, das das Reaktionsprodukt umfaßt zwischen:
   a) einer Titanverbindung mit wenigstens einer Ti-N-Bindung, und
   b) einer aluminiumorganischen Verbindung, die wenigstens ein Sauerstoffatom enthält, das an ein Aluminiumatom gebunden ist oder sich zwischen zwei Aluminiumatomen befindet.

2. Verfahren nach Anspruch 1, worin sich die Verbindung des Übergangsmetalls und die aluminiumorganische Verbindung auf organischen oder anorganischen Trägerstoffen wie $SiO_2$, $Al_2O_3$ oder Mg-Halogeniden befinden.

3. Verfahren nach Anspruch 1 oder 2, worin das Molverhältnis von aluminiumorganischer Verbindung zu Titanverbindung 1 bis 1000, vorzugsweise 10 bis 200, beträgt.

4. Verfahren nach irgendeinem der vorhergehenden Ansprüche, worin die Konzentration der aluminiumorganischen Verbindung $10^{-4}$ bis 1 Mol/Liter, bezogen auf die Reaktionsmischung, beträgt.

5. Verfahren nach irgendeinem der vorhergehenden Ansprüche, worin die Verbindung des Übergangsmetalls ausgewählt ist aus
   $TiCl_3N(C_6H_5)_2$, $TiCl_3N(C_2H_5)_2$; $TiCl_2(N(C_4H_9)_2)_2$; $TiCl_2N(C_4H_9)_2$; $TiCl(N(C_3H_7)_2)_3$; $TiCl_2N(C_2H_5)_2$; $TiCl_2(N(C_2H_5)_2)_2$; $Ti(N(C_6H_5)_2)_4$; $Ti(N(C_2H_5)_2)_4$.

6. Verfahren nach irgendeinem der vorhergehenden Ansprüche, worin die aluminiumorganische Verbindung ausgewählt ist aus:

(A) 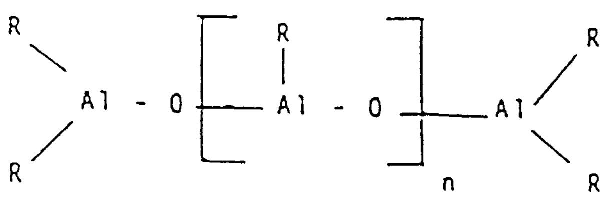 und

(B) 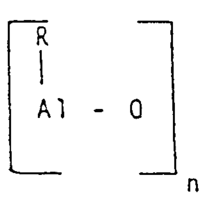

worin:
n gleich 0 oder eine ganze Zahl von 1 bis 40, vorzugsweise von 10 bis 30 ist; R sein kann: ein Alkylrest mit 1 bis 20 Kohlenstoffatomen, ein Arylrest mit 6 bis 20 Kohlenstoffatomen, ein Arylalkylrest mit 7 bis 20 Kohlenstoffatomen oder ein Cycloalkylrest mit 3 bis 20 Kohlenstoffatomen; ein O-R'-Rest, worin R' ein Alkylrest mit 1 bis 8 Kohlenstoffatomen oder ein Arylrest mit 6 bis 20 Kohlenstoffatomen sein kann; oder ein Halogen, unter der Bedingung, daß nicht alle Reste R Halogen oder O-R' sind.

**7.** Verfahren nach Anspruch 6, worin die aluminiumorganischen Verbindungen mit Aluminiumtrialkylen oder Aluminiumalkylhalogeniden gemischt sind, worin die Alkylgruppen 1 bis 8 Kohlenstoffatome enthalten.

**8.** Verfahren nach Anspruch 6, worin die aluminiumorganische Verbindung das geradkettige Methylaluminoxan (A) mit n = 20 ist.

**9.** Verfahren nach Anspruch 6, worin die aluminiumorganische Verbindung das cyclische Methylaluminoxan (B) mit n = 20 ist.

**10.** Verfahren nach irgendeinem der vorhergehenden Ansprüche, worin das vinylaromatische Monomer Styrol oder ein Styrolderivat ist, beispielsweise ausgewählt aus Alkylstyrol, halogeniertem Styrol, Vinylnaphthalin und Vinyltetrahydronaphthalin, jeweils mit 9 bis 12 Kohlenstoffatomen im Molekül.

**Revendications**

**1.** Un procédé de production de polymères vinylaromatiques cristallins ayant une structure principalement syndiotactique, qui comprend la polymérisation des monomères vinylaromatiques, soit seuls, soit en mélange avec jusqu'à 30% d'un autre monomère à insaturation éthylénique copolymérisable, en présence de quantités catalytiques d'un système catalytique comprenant le produit de la réaction entre:
a) un composé de titane contenant au moins une liaison Ti-N, et
b) un composé d'organoaluminium contenant au moins un atome d'oxygène, lié à un atome d'aluminium ou situé entre deux atomes d'Al.

**2.** Le procédé selon la revendication 1, dans lequel le composé de métal de transition et le composant d'organoaluminium sont supportés par des supports organiques ou inorganiques, tels que $SiO_2$, $Al_2O_3$ ou halogénures de Mg.

**3.** Le procédé selon la revendication 1 ou 2, dans lequel le rapport molaire de composé d'organoaluminium sur le composé de métal de transition est de 1 à 1 000, de préférence de 10 à 200.

**4.** Le procédé selon l'une quelconque des revendications précédentes, dans lequel la concentration du composé d'organoaluminium est comprise entre $10^{-4}$ et 1 mole/litre, sur la base du mélange réactionnel.

**5.** Le procédé selon l'une quelconque des revendications précédentes, dans lequel le composé de métal de transition est choisi parmi:
$TiCl_3N(C_6H_5)_2$, $TiCl_3N(C_2H_5)_2$, $TiCl_2[N(C_4H_9)_2]_2$,
$TiCl_2N(C_4H_9)_2$, $TiCl[N(C_3H_7)_2]_3$, $TiCl_2N(C_2H_5)_2$,
$TiCl_2[N(C_2H_5)_2]_2$, $Ti[N(C_6H_5)_2]_4$, $Ti[N(C_2H_5)_2]_4$.

**6.** Le procédé selon l'une quelconque des revendications précédentes, dans lequel le composé d'organoaluminium est choisi parmi:

(A) 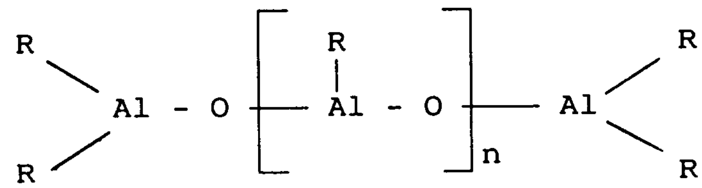

et

(B) 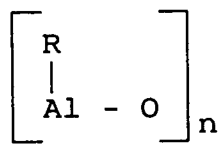

dans lesquelles:

- n est 0 ou un entier de 1 à 40, de préférence de 10 à 30;
- R peut être: un radical alkyle contenant de 1 à 20 atomes de carbone, un radical aryle contenant de 6 à 20 atomes de carbone, un radical arylalkyle contenant de 7 à 20 atomes de carbone ou un radical cycloalkyle contenant de 3 à 20 atomes de carbone; un radical O-R' où R' peut être un radical alkyle ayant de 1 à 8 atomes de carbone, ou un radical aryle contenant de 6 à 20 atomes de carbone, ou un halogène, pourvu que les radicaux R ne soient pas tous des halogènes ou des groupes O-R'.

**7.** Le procédé selon la revendication 6, dans lequel les composés d'organoaluminium sont mélangés avec des trialkylaluminiums ou des halogénures d'alkylaluminium, dans lesquels les groupes alkyles contiennent de 1 à 8 atomes de carbone.

**8.** Le procédé selon la revendication 6, dans lequel le composé d'organoaluminium est le méthylaluminoxane linéaire (A) avec n = 20.

**9.** Le procédé selon la revendication 6, dans lequel le composé d'organoaluminium est le méthylaluminoxane cyclique (a) avec n = 20.

**10.** Le procédé selon l'une quelconque des revendications précédentes, dans lequel le monomère vinylaromatique est le styrène ou un dérivé de styrène, par exemple choisi parmi l'alkylstyrène, le styrène halogéné, le vinylnaphtalène et le vinyltétrahydronaphtalène, contenant chacun de 9 à 12 atomes de carbone dans la molécule.

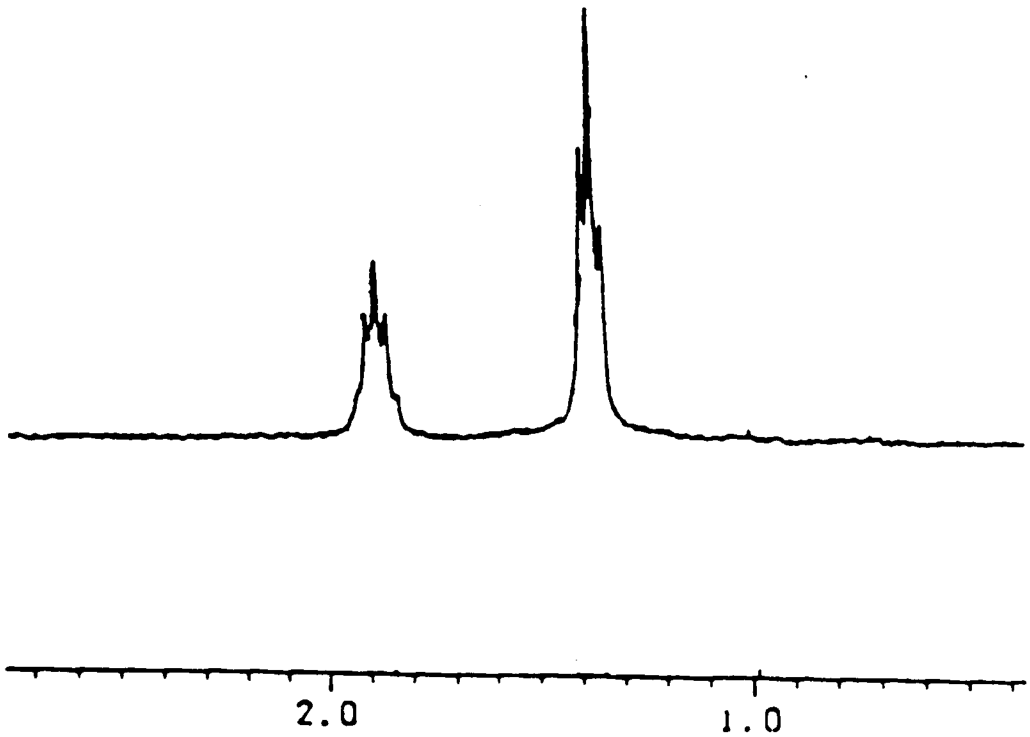


FIG. 1